Europäisches Patentamt

European Patent Office

Office européen des brevets

(19)

(11) Veröffentlichungsnummer: **0 275 389 B1**

(12) **EUROPÄISCHE PATENTSCHRIFT**

(45) Veröffentlichungstag der Patentschrift: **04.09.91**

(21) Anmeldenummer: **87116628.6**

(22) Anmeldetag: **11.11.87**

(51) Int. Cl.⁵: **B29C 51/16, B29C 67/22**

(54) Verfahren zum Herstellen von Innenverkleidungsteilen für Fahrzeuge.

(30) Priorität: **21.01.87 DE 3701560**

(43) Veröffentlichungstag der Anmeldung:
**27.07.88 Patentblatt 88/30**

(45) Bekanntmachung des Hinweises auf die
Patenterteilung:
**04.09.91 Patentblatt 91/36**

(84) Benannte Vertragsstaaten:
**DE FR GB IT SE**

(56) Entgegenhaltungen:
**EP-A- 0 018 951**
**DE-C- 3 613 879**

(73) Patentinhaber: **DEUTSCHE FIBRIT GESELL-
SCHAFT Ebers & Dr. Müller mbH**
**Cracauer Strasse 55**
**W-4150 Krefeld(DE)**

(72) Erfinder: **Furth, Heinz**
**Johannesfeld 8**
**W-4054 Nettetal 1(DE)**
Erfinder: **Giese, Wolfgang**
**Fährstrasse 209**
**W-4000 Düsseldorf-Hamm(DE)**
Erfinder: **Karius, Dieter**
**Nierstheide 31**
**W-4060 Viersen 12(DE)**

(74) Vertreter: **Cohausz & Florack Patentanwälte**
**Postfach 14 01 61 Schumannstrasse 97**
**W-4000 Düsseldorf 1(DE)**

## Beschreibung

Die Erfindung betrifft ein Verfahren zum Herstellen von Innenverkleidungsteilen für Fahrzeuge mit verschiedenen aneinander stoßenden Dekormaterialien auf Hartschaumträgern. Bei diesem Verfahren werden, wie z.B. aus der DE-U 8523858 bekannt, zwei Dekormaterialzuschnitte, einander im Randbereich überlappend, in eine Schäumformhälfte eingelegt, und in die geschlossene Schäumform wird in den auf der Rückseite der Zuschnitte gebildeten Formhohlraum GF-PUR-Hartschaum eingebracht und ausreagiert.

In "Kunststoffe bei der Innenausstattung von Fahrzeugen" (Verein Deutscher Ingenieure VDI-Gesellschaft Kunststofftechnik Düsseldorf VDI-Verlag 1979) erklärt Goiogetto Guigearo in "Zukunftsgedanken zum Gestalten der Inneneinrichtung" auf Seite 37, daß mit Stoff zukünftig auf angenehme Art und Weise die Innerverkleidung den Sitzbezügen anzupassen sei. Um z.B. den unterschiedlichen Anforderungen an die Bezüge bei Belastungen des Dekormaterials durch Berührung und andere Umgebungseinflüsse gerecht zu werden, wurden Verkleidungselemente geschaffen, wie sie beispielsweise in "Kunststoffe im Automobilbau" (Verein Deutscher Ingenieure VDI-Gesellschaft Kunststofftechnik VDI-Verlag 1983) von Hans Günther Haldenwanger, Helmut Repper und Siegfried Schäper in "Neue Kunststoffanwendungen bei der Innenausstattung -Teile mit Multifunktion- des Audi 100" beschrieben sind. Auf einen vorgefertigten Träger werden verschiedene Dekormaterialien aufgebracht. Die nach dem dort dargestellten Verfahren zwangsweise resultierende Schweißziernaht im Übergangsbereich zwischen textilem Dekormaterial und der Kunststoffhaut inzwischen für den Fahrzeugkäufer an optischer Attraktivität eingebüßt, da offenbar auch für den Laien immer der Charakter "Kunststoff" erhalten blieb.

Dem sich ändernden Käuferverhalten will man in der Weise entgegenkommen, daß ein flächiges Trägerteil an der Berührungslinie verschiedener Dekormaterialien eine Nut aufweist, in welche die Ränder der Dekore eingeschoben werden und dadurch eine optisch attraktive Übergangsstelle zwischen z.B. Folien und Stoffen geschaffen wird (DE-GM 83 07 414). Der Nachteil bei dieser Arbeitsweise ist der, daß bereits bei der Planung des Trägers die Festlegung auf die spätere Sichtflächengestaltung auch im Formbau berücksichtigt sein muß. Wirtschaftliche Gesichtspunkte begrenzen somit naturgemäß eine Typenvielfalt in z.B. Verlauf der Übergangsstelle oder auch Stoffpaarungen der Materialien.

In dem DE-GM 85 23 858 ist die gattungsgemäße Verfahrensweise beschrieben, die diese Nachteile nicht aufweist. Durch Vorfertigen einer Dekormaterialkombination über Verschweißung verschiedener Dekore entsteht ein Vorformling, der als Einlegeteil in eine Schäumform gebracht wird und, mit Glasfaser-verstärktem Polyurethan- (GF-PUR) Hartschaum hinterschäumt, das fertige Innenausstattungsteil ergibt. Nachteil bei diesem Verfahren ist, daß für den Betrachter wiederum die typische Schweißziernaht sichtbar bleibt.

Aus der EP-A-0018951 ist ein Verfahren zum Herstellen von Verkleidungsteilen bekannt, bei dem ein Dekorzuschnitt in die Schaumformhälfte eingelegt und mit seinem Ende unter Bildung eines rohrförmigen Hohlraums um den Endabschnitt eines Stegs der Schaumformhälfte herumgelegt wird. Darüber wird dann eine weitere Schicht aus Kunstharz, z. B. Lederimitat, gelegt und hinterschäumt. Auf diese Weise soll ein möglichst nahtloser Übergang zwischen den benachbarten unterschiedlichen Dekorabschnitten erreicht werden.

Der Erfindung liegt die Aufgabe zugrunde, Dekorübergangsstellen, z. B. zwischen Folien, Stoffen, und anderen üblichen Oberflächenmaterialien, auf Innenverkleidungsteilen auf der Sichtseite so zu gestalten, daß ein optisch attraktives Bild entsteht und die störende Verbindungsschweißnaht oder ein offener Spalt an der sichtbaren Oberfläche entfällt und für den Träger in Abhängigkeit der Gestaltungsvielfalt keine Formkosten in der Höhe anfallen, wie sie beispielsweise für Preß- oder Spritzgußformkörper für jede Variante notwendig wären.

Diese Aufgabe wird mit den Maßnahmen des Anspruchs 1 erfindungsgemäß dadurch gelöst, daß die Dekorübergangsstellen auf der Sichtseite des Innenverkleidungsteils der Schäumform mit Hilfe von Einlegeschablonen derart vorgestaltet werden, daß an der Verbindungsstelle vom einen zum anderen Dekormaterial ein Steg gebildet ist, an dessen gegenüberliegende Flanken die aneinandergrenzenden Endabschnitte der in die Schäumform eingelegten Dekormaterialzuschnitte angelegt werden und daß die Dekormaterial-Zuschnitte von einem in die Schäumform eingebrachten naszierenden GF-PUR-Hartschaum als tragendem Element fixiert wird.

Wesen und Inhalt der Erfindung betrifft somit die Herstellung eines attraktiven Innenausstattungsteiles mit großer Gestaltungsfreiheit und Typenvielfalt ohne Bindung an die Formgebung eines vorgefertigten Trägers.

In Ausgestaltung der Erfindung werden weitgehend gasdichte Dekormaterialien, die auf ihrer Rückseite mit einem Aktivierungskleber beschichtet sind, als Zuschnitte in eine Schäumform eingelegt, in der mindestens eine abnehmbare gasdurchlässige Schablone eingesetzt worden ist, die einen umlaufenden festen erhabenen Rand in Form eines Steges aufweist, an dem die Dekormaterial-Zuschnitte sich anlegen und dort einen nahezu rechtem Winkel gegenüber der Formfläche bilden. Mindestens in diesem Bereich werden die Zuschnitte und die Schablone durch Vakuum an der Schaumform gehalten.

Die Schnittkante des zuerst eingelegten Dekormaterial-Zuschnitts sollte gasdurchlässig sein, wodurch das angelegte Vakuum in diesem Bereich konzentriert werden kann. In einem zweiten Arbeitsschritt wird auch auf den Rest der Formhälfte ein weiches Folienmaterial gegeben und auch dort Vakuum angelegt. Das aufgelegte Folienmaterial deckt nun den vorher eingelegten Stoff ab und gehorcht in den Randzonen des Stoffbereiches dem dort vorhandenen Stegverlauf und erhält Kontakt mit dem Aktivierunskleber des eingelegten und vakuumfixierten Stoffes. Dieses Gebilde wird solange mit Vakuum gehalten, bis die Form zugefahren ist und der eingebrachte GF-PUR-Hartschaum so weit reagiert hat, daß die Form gestaltfest ist und entformt werden kann. Bis dahin hat die exotherme Reaktion des Polyol-Isocyanat-Gemisches zur Wärmeaktivierung des Klebers zwischen Stoff und Folienmaterial beigetragen. Bei der Entformung gleitet der Steg zwischen Textil und Folien-kaschiertem Bereich aus der entstandenen Nut, in der nunmehr auf einer Seite ausschließlich eingezogenes Textilmaterial und auf ihrer anderen Seite ausschließlich eingezogenes Folienmaterial sichtbar bleibt. Der Übergang ist sauber und einwandfrei. Eine Übergangszone in Form einer Verbindungsschweißnaht ist nicht mehr vorhanden.

Ausführungsbeispiel:

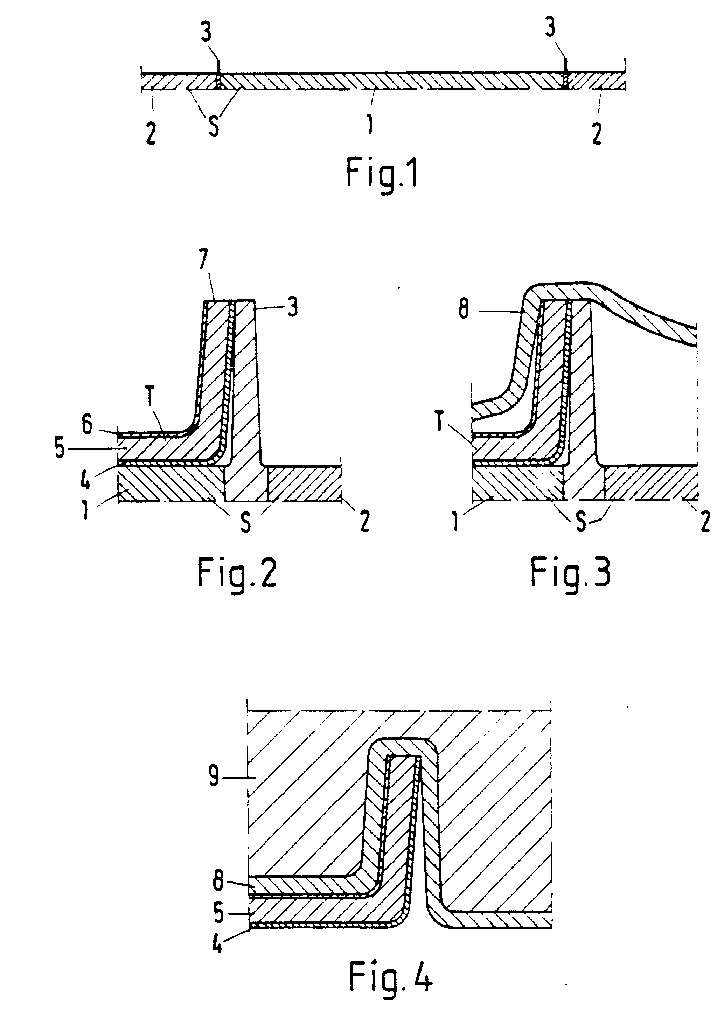

Eine Schäumformhälfte verfügt gemäß Fig. 1 über verschiedene Vakuumzonen 1,2, an deren Rändern erhabene Stege 3 ausgebildet sind. In die Vakuumzone 1 wird ein rückenbeschichtetes, zugeschnittenes Textilmaterial T gemäß Fig. 2 eingelegt und durch Vakuum an die Schäumformoberfläche gesaugt. Das Textilmaterial T hat folgenden Aufbau:
Gewebe 4, Weichschaumschicht 5, Sperrfolie 6 mit Aktivierungskleber.

Das Vakuum wird durch die Schnittfläche 7 zur Fixierung des Textilmaterials wirksam. In die Vakuumzone 2 der Schäumformhälfte wird ferner eine sich bis über den Steg 3 einer in die Schäumform gelegten Schablone erstreckende Dekorfolie 8 gemäß Fig. 3 gelegt, die ebenfalls durch Vakuum fixiert wird. In diesem Zustand wird die Schäumform zur üblichen Bildung eines GF-PUR-Hartschaumträgers 9 geschlossen. Bis zur Entformung bildet der Steg 3 die Feder in einer Nut, deren Flanken auf einer Seite von dem Gewebe 4 und auf der anderen Seite von der Schaum-Dekorfolie 8 gebildet sind. Bei der Entformung entfernt sich der Steg 3 aus dieser Nut, wobei die Flanken während der Härtungsreaktion des Schaumes fixiert worden sind und der Aktivierungskleber auf der Sperrfolie 6 durch die positive Wärmetönung wirksam geworden ist.

Da nunmehr Stoff und Schaum-Dekorfolie vollkommen druckentlastet sind, schließt sich die entstandene Nut weitestgehend, so daß ein äußerst sauberes und perfektes Bild an diesem mit GF-PUR-Hartschaum hinterschäumten Dekor-Übergangsbereich entsteht (Fig. 4).

Das erfindungsgemäße Verfahren ermöglicht es, ein optisch attraktives Innenverkleidungsteil für Fahrzeuge, für das z.B. Kunststoff-Dekor-Materialien zu schaffen, das wirtschaftlich in großen Stückzahlen in wenigen Arbeitsgängen mit großer Gestaltungsfreiheit herstellbar ist und dessen optische Erscheinung ein handwerkliches Können und individuelle Fertigung verrät.

**Patentansprüche**

1. Verfahren zum Herstellen von Innenverkleidungsteilen für Fahrzeuge mit verschiedenen aneinanderstoßenden Dekormaterialien auf Hartschaumträgern, bei dem zwei Dekormaterialzuschnitte, einander im Randbereich über einen Steg in der Schäumform überlappend, in eine Schäumformhälfte eingelegt werden und in die geschlossene Schäumform in den auf der Rückseite der Zuschnitte gebildeten Formhohlraum GF-PUR-Hartschaum eingebracht und ausreagiert wird,
   **gekennzeichnet durch** folgende Maßnahmen:
   a) in eine der Schäumformhälften wird eine Schablone mit einem in das Innere der Schäumform ragenden Steg lose eingelegt;
   b) ferner wird in dieselbe Schäumformhälfte ein erster Dekormaterialzuschnitt so eingelegt, daß sein Endabschnitt nur an der einen Flanke des Steges liegt;
   c) der zweite Dekormaterialzuschnittt wird so in dieselbe Schäumformhälfte eingelegt, daß er an der anderen Flanke des Steges liegt und, den Steg übergreifend, den ersten Zuschnitt überlappt.

2. Verfahren nach Anspruch 1,
   **dadurch gekennzeichnet,** daß die Schablone und die Zuschnitte durch Vakuum in der Schäumform fixiert werden.

**Claims**

1. A process for the production of internal lining parts for vehicles, having various abutting decorative materials on hard foam supports, wherein two blanks of decorative material, overlapping one another in the edge zone via a web in the foaming mould, are introduced into a foaming mould half, whereafter glass fibre reinforced polyurethane hard foam is introduced into the cavity formed on the rear side of the blanks in the closed foaming mould and completely reacted, characterized by the following steps:

a) a template having a web extending into the inside of the foaming mould is loosely introduced into one of the foaming mould halves;

b) then a first blank of decorative material is so inserted into the same foaming mould half that the end portion of the blank bears against only one flank of the web;

c) the second blank of decorative material is so inserted into the same foaming mould half that the blank bears against the other flank of the web and, engaging over the web, overlaps the first blank.

2. A process according to claim 1, characterized in that the template and the blanks are fixed by vacuum in the foaming mould.

**Revendications**

1. Procédé pour fabriquer des pièces de revêtement intérieur pour véhicules avec différents matériaux de décoration sur des supports en mousse dure, qui butent les uns contre les autres, dans lequel deux sections de matériau de décoration sont introduites dans un demi-moule de moussage en se recouvrant l'une l'autre dans le moule de moussage dans la région de bord par l'intermédiaire d'une nervure et de la mousse dure de polyuréthane renforcée de fibres de verre est introduite dans le moule de moussage fermé, dans le volume creux de moule formé sur la face arrière des sections,

caractérisé par les mesures suivantes :

a) on introduit librement dans l'une des moitiés du moule de moussage un gabarit avec une nervure en saillie dans l'intérieur de la forme de moussage,

b) on introduit en outre dans la même moitié de moule de moussage une première section de matériau de décoration de telle manière que son segment d'extrémité ne s'appuie que sur des flancs de la nervure,

c) on introduit la deuxième section de matériau de décoration dans la même moitié de moule de moussage de telle manière qu'elle repose sur l'autre flanc de la nervure et recouvre la première section en enjambant la nervure.

2. Procédé selon la revendication 1, caractérisé en ce que les gabarits et les sections sont fixés par vide dans le moule de moussage.

Fig.1

Fig.2

Fig.3

Fig.4